# EUROPÄISCHE PATENTSCHRIFT

(11) **EP 3 935 222 B1**
(45) Veröffentlichungstag und Bekanntmachung des Hinweises auf die Patenterteilung: **19.07.2023**
(21) Anmeldenummer: 20710098.3
(22) Anmeldetag: 04.03.2020
(51) Int. Cl.: E02D 27/01, E02D 27/42

(54) **FLACHGEGRÜNDETES FUNDAMENT**
FLAT FOUNDED FOUNDATION
FONDATIONJ D'UN PLAFOND

(30) Priorität: 19.03.2019 DE 102019106972
(43) Veröffentlichungstag der Anmeldung: 12.01.2022
(73) Patentinhaber: Max Bögl Wind AG, 92369 Sengenthal (DE)
(72) Erfinder: BETZ, Thorsten, 92318 Neumarkt (DE)
(74) Vertreter: Canzler & Bergmeier Patentanwälte Partnerschaft mbB
(86) Internationale Anmeldenummer: PCT/EP2020/055745
(87) Internationale Veröffentlichungsnummer: WO 2020/187574

(56) Entgegenhaltungen:
- WO-A1-2014/180828
- WO-A2-2007/130667
- CN-A- 109 296 502

## Beschreibung

Die vorliegende Erfindung betrifft ein flachgegründetes Fundament für ein Bauteil, insbesondere für ein auskragendes Bauwerk, insbesondere für einen Windkraftturm, mit einer Fundamentplatte mit einer Unterseite, einer Oberseite sowie einem Mittelpunkt. Das Fundament weist an oder unter der Unterseite der Fundamentplatte wenigstens eine erste, nicht lastabtragende Weichschichteinlage auf.

Bei momentenbelasteten, flach gegründeten Fundamenten besteht häufig das Problem, dass es in den Randbereichen des Fundaments zu einer grö-ßeren Belastung des Untergrunds kommt als in dem Mittelbereich des Fundaments. Dies kann zu einem Klaffen der Bodenfuge zwischen Fundament und Untergrund und weiterhin auch zu einem Kippen des Fundaments mitsamt dem Bauteil führen. Ein Beispiel für derartige Bauteile sind Masten mit exzentrischem Lastangriff wie beispielsweise Strom- oder Telekommunikationsmasten. Ebenso kommt es bei Türmen, insbesondere auch bei Windkrafttürmen mit wechselnden dynamischen Lasten, zu erheblichen Momentenbelastungen des Fundaments mit den beschriebenen Folgen, die oftmals auch zur Ausbildung einer Sattellage führen. Die Standsicherheit des Fundaments mit dem Bauteil kann hierdurch erheblich beeinträchtigt werden. Auch bei anderen Konstruktionen mit größeren exzentrischen Belastungen kann es zu diesen Problemen kommen. Derartige Fundamente werden daher generell mit sehr großen Abmessungen ausgeführt.

Für Fundamente von Windkraftanlagen wurde weiterhin bereits vorgeschlagen, im Mittelbereich des Fundaments eine Weichschicht anzuordnen. Dies ist beispielsweise in der Veröffentlichung "Schäden an Tragstrukturen für Windenergieanlagen" (Horst Bellmer, Fraunhofer IRB Verlag, 2016) beschrieben. Der Ort der Krafteinleitung in den Untergrund wird hierdurch in die äu-ßeren Bereiche des Fundaments gebracht, was der Bildung einer Sattellage entgegenwirken kann. Es sind jedoch nach wie vor massive Fundamentkörper erforderlich.

Aufgabe der vorliegenden Erfindung ist es daher, ein Fundament mit einem besseren Widerstand gegen Klaffen vorzuschlagen.

Die Aufgabe wird gelöst durch ein Fundament mit den Merkmalen des Anspruchs 1.

Ein flachgegründetes Fundament für ein Bauteil, insbesondere für ein auskragendes Bauwerk, insbesondere für einen Windkraftturm, weist eine Fundamentplatte mit einer Unterseite, einer Oberseite sowie einem Mittelpunkt auf. Das Fundament weist weiterhin an oder unter der Unterseite der Fundamentplatte wenigstens eine erste, nicht lastabtragende Weichschichteinlage auf. Bei einem derartigen Fundament ist nun vorgesehen, dass die wenigstens eine erste Weichschichteinlage nicht mehr wie im Stand der Technik in dem Mittelbereich, sondern vielmehr beabstandet von dem Mittelpunkt angeordnet ist. Dabei ist die wenigstens eine erste Weichschichteinlage derart beabstandet von dem Mittelpunkt angeordnet, dass sie das Fundament in wenigstes einen inneren und wenigstens einen äußeren lastabtragenden Bereich unterteilt. Der innere lastabtragende Bereich ist somit näher an dem Mittelpunkt gelegen als der äußere lastabtragende Bereich, der weiter vom Mittelpunkt entfernt gelegen ist.

Durch die Unterteilung in einen äußeren und einen inneren lastabtragenden Bereich kann nun erreicht werden, dass zumindest ein Teil der auftretenden Kräfte nicht mehr bis nach außen in die Randbereiche des Fundaments geleitet wird, sondern in dem inneren lastabtragenden Bereich direkt in den Boden abgetragen werden kann. Im Wesentlichen handelt es sich dabei um die aus der Normalkraft des Bauteils sowie des Fundaments resultierenden Kräfte, die nun zumindest teilweise direkt im Mittelbereich des Fundaments in den Untergrund geleitet werden können. Ebenso wird nur noch ein Teil der abzutragenden Kräfte, nämlich im Wesentlichen die aus der Momentenbelastung resultierenden Kräfte, bis in den oder die äußeren lastabtragenden Bereiche weitergeleitet und somit in einem Randbereich des Fundaments abgetragen.

Dadurch, dass nun die Kräfte in die Randbereiche des Fundaments geleitet werden, ergibt sich ein größerer resultierender Hebelarm, was den oftmals maßgebenden Nachweis des klaffenden Fundaments günstig beeinflusst. Dadurch können diese Fundamente im Vergleich zum Stand der Technik wesentlich kleiner und weniger massiv ausgeführt werden. Ein weiterer Vorteil einer derartigen beabstandet vom Mittelpunkt angeordneten Weichschichteinlage ist es, dass diese zielgerichtet entsprechend den später auftretenden statischen oder dynamischen Belastungen im Betrieb platziert werden kann und somit für jedes Bauteil bzw. Bauwerk, welches auf dem Fundament angeordnet werden soll, angepasst werden kann. Hierdurch kann beispielsweise auch stark einseitigen exzentrischen Belastungen Rechnung getragen werden.

Nach einer vorteilhaften Ausführung des Fundaments ist die wenigstens eine erste Weichschichteinlage ringförmig, insbesondere kreisringförmig oder rechteckringförmig, um den Mittelpunkt angeordnet. Eine derartige Ausführung ist insbesondere für Bauteile bzw. Bauwerke mit wechselnden exzentrischen Belastungen aus verschiedensten Richtungen geeignet. Beispielsweise treten derartige Belastungen bei Windkrafttürmen auf, bei denen sowohl die Windkräfte als auch die Belastungen durch die drehenden Rotoren aus wechselnden Richtungen auf das Bauwerk einwirken.

Nach einer anderen Weiterbildung der Erfindung ist es vorteilhaft, wenn das Fundament an oder unter der Unterseite der Fundamentplatte wenigstens eine weitere, nicht lastabtragende Weichschichteinlage aufweist, welche radial beabstandet zu der wenigstens einen ersten Weichschichteinlage angeordnet ist. Die äußere und die innere Weichschichteinlage sind somit räumlich voneinander getrennt. Das Fundament wird hierdurch beispielsweise in mehrere innere lastabtragende Bereiche und einen äußeren lastabtragenden Bereich unterteilt. Durch die gezielte Anordnung einer oder mehrerer Weichschichteinlagen kann in jedem Fall die Einleitung der auf das Fundament wirkenden Kräfte in den Untergrund belastungsgerecht angepasst werden. Der Begriff radial bezieht sich dabei, wie auch im Rahmen der gesamten vorliegenden Anmeldung, nicht nur auf kreis- oder kreisringförmige Fundamente, sondern bezeichnet lediglich den Abstand vom Mittelpunkt des Fundaments nach außen hin.

Dabei ist es wiederum vorteilhaft, wenn die wenigstens eine weitere Weichschichteinlage konzentrisch innerhalb der wenigstens einen ersten Weichschichteinlage angeordnet ist. Eine solche symmetrische Ausführung ist wiederum, wie oben beschrieben, für Bauteile bzw. Bauwerke mit wechselnden Belastungen aus verschiedensten Richtungen geeignet.

Nach einer ersten Ausführung des Fundaments mit einer weiteren Weichschichteinlage ist es vorteilhaft, wenn die wenigstens eine weitere Weichschichteinlage ringförmig, insbesondere kreisringförmig oder rechteckringförmig um den Mittelpunkt angeordnet ist. Es ist hierdurch trotz der Anordnung zweier Weichschichteinlagen dennoch ein größerer, innerer lastabtragender Bereich vorhanden.

Nach einer anderen vorteilhaften Ausführung ist die wenigstens eine weitere Weichschichteinlage als ein um den Mittelpunkt angeordneter Weichschichtkern ausgebildet. Es kann hierdurch wie im Stand der Technik eine vorteilhafte Ableitung der Kräfte in die äußeren Bereiche des Fundaments erfolgen, die der Ausbildung einer Sattellage entgegenwirkt.

Weiterhin ist es insbesondere bei einem kreisförmigen oder rechteckförmigen Fundament auch für den Weichschichtkern vorteilhaft, wenn dieser kreisförmig oder rechteckförmig um den Mittelpunkt ausgebildet wird.

Nach einer vorteilhaften Weiterbildung des Fundaments ist weiterhin unter der Fundamentplatte des Fundaments eine Sauberkeitsschicht angeordnet. Diese dient in üblicher Weise dazu, eine ebene, saubere Oberfläche für die folgenden Fundamentarbeiten bereitzustellen.

Weist das Fundament eine Sauberkeitsschicht auf, so ist es vorteilhaft, wenn die wenigstens eine erste und/oder die wenigstens eine weitere Weichschichteinlage zumindest teilweise innerhalb der Sauberkeitsschicht angeordnet ist. Alternativ ist es aber auch möglich, dass die wenigstens eine erste und/oder die wenigstens eine weitere Weichschichteinlage unterhalb der Sauberkeitsschicht angeordnet ist. Der folgende Fundamentbau kann hierdurch erleichtert sein.

Nach einer anderen Ausführung ist es vorteilhaft, wenn die wenigstens eine erste und/oder die wenigstens eine weitere Weichschichteinlage zumindest teilweise innerhalb der Fundamentplatte angeordnet ist.

Vorteilhaft ist es, wenn die wenigstens eine erste und/oder die wenigstens eine weitere Weichschichteinlage aus einem Schaumstoff, insbesondere einem expandierten Polystyrol, besteht. Derartige Werkstoffe sind so weich, dass sie zur Lastabtragung in den Untergrund nicht beitragen können und daher geeignet, die Kräfte in die lastabtragenden Bereiche des Fundaments weiterzuleiten.

Weiterhin ist es vorteilhaft, wenn die wenigstens eine erste Weichschichteinlage einen Abstand zu einem Randbereich des Fundaments aufweist, welcher zwischen 1/3 und 1/2 des Abstandes des Mittelpunkts zu dem Randbereich beträgt. Ist das Fundament kreisförmig ausgeführt, beträgt demnach der Abstand der Weichschichteinlage zu dem Randbereich die Hälfte bis zu einem Drittel des Radius des Fundaments.

Die wenigstens eine erste Weichschichteinlage ist somit in etwa mittig zwischen dem Randbereich und dem Mittelpunkt angeordnet, so dass noch immer ein ausreichend großer, äußerer lastabtragender Bereich erzielt wird.

Weitere Vorteile der Erfindung sind in den nachfolgenden Ausführungsbeispielen beschrieben. Es zeigen:
- **Figur 1**: eine schematische Seitenansicht eines Fundaments mit einem Bauteil,
- **Figur 2**: eine schematische Schnittdarstellung eines Fundaments mit einer ersten Weichschichteinlage,
- **Figur 3**: eine schematische Schnittdarstellung eines Fundaments mit einer ersten und einer weiteren Weichschichteinlage,
- **Fig. 4** - **7**: jeweils eine schematische Untersicht eines Fundaments nach verschiedenen Ausführungen,
- **Figur 8**: eine schematische Schnittdarstellung eines Fundaments mit einer ersten und einer weiteren Weichschichteinlage und einer Sauberkeitsschicht, sowie
- **Figur 9**: eine schematische Halbschnittdarstellung eines Fundaments mit einer ersten Weichschichteinlage für ein Kalottenlager.

Bei der nachfolgenden Beschreibung der Figuren werden für in den verschiedenen Figuren jeweils identische und/oder zumindest vergleichbare Merkmale gleiche Bezugszeichen verwendet. Die einzelnen Merkmale, deren Ausgestaltung und/oder Wirkweise werden meist nur bei ihrer ersten Erwähnung ausführlich erläutert. Werden einzelne Merkmale nicht nochmals detailliert erläutert, so entspricht deren Ausgestaltung und/oder Wirkweise der Ausgestaltung und Wirkweise der bereits beschriebenen gleichwirkenden oder gleichnamigen Merkmale. Weiterhin werden aus Gründen der Übersichtlichkeit von mehreren identischen Merkmalen oftmals nur eines oder nur einige wenige mit Bezugszeichen versehen und weiterhin auch nicht in allen Figuren alle Bezugszeichen dargestellt.

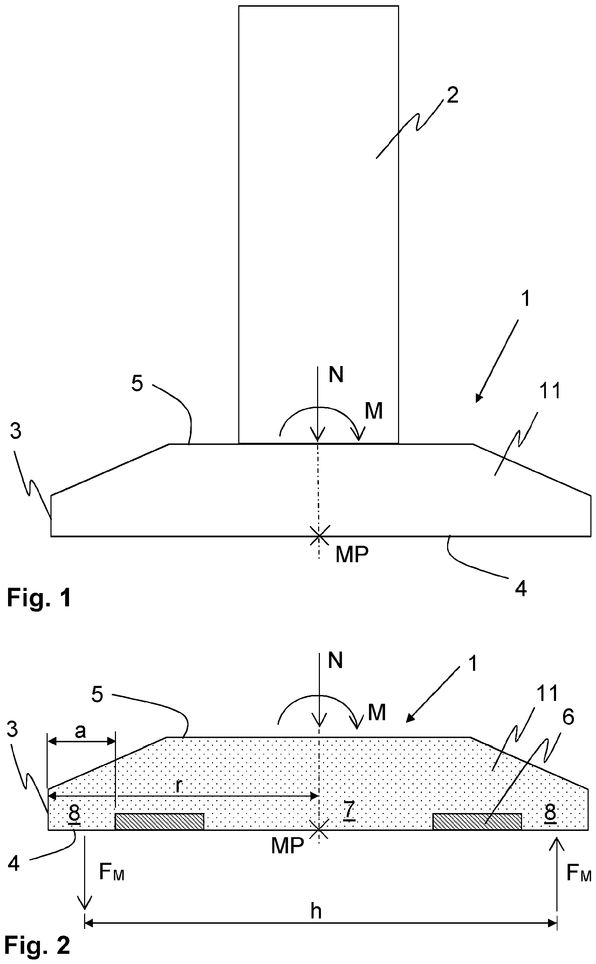

Figur 1 zeigt eine schematische Seitenansicht eines Fundaments 1 mit einem Bauteil 2. Das Fundament 1 beinhaltet vorliegend eine Fundamentplatte 11 und weist eine Unterseite 4, eine Oberseite 5, einen Randbereich 3 sowie einen Mittelpunkt MP auf. Der Mittelpunkt MP befindet sich auf einer strichpunktiert dargestellten Mittellinie und ist vorliegend auf Höhe der Unterseite 5 des Fundaments 1 bzw. der Fundamentplatte 11 dargestellt. Für die vorliegende Erfindung ist jedoch die Höhenlage des Mittelpunkts MP nicht von Bedeutung. Auf dem Fundament 1 ist ein Bauteil 2 angeordnet, welches vorliegend ein von dem Fundament auskragendes Bauwerk wie beispielsweise ein Turm oder Mast ist. Das Bauteil 2 weist ein bestimmtes Eigengewicht auf und ist zudem verschiedenen statischen und/oder dynamischen Einwirkungen ausgesetzt. An der Schnittstelle zwischen dem Bauteil 2 und dem Fundament 1 werden daher verschiedene Belastungen in das Fundament 1 eingeleitet und von diesem an den Untergrund abgetragen. Vorliegend sind diese Belastungen in sehr allgemeiner Weise durch eine Normalkraft N und eine Momentenbelastung M symbolisiert. Das vorliegend gezeigte Bauteil 2 könnte beispielsweise ein Windkraftturm sein, der sein Eigengewicht sowie das Gewicht der an ihm angeordneten Komponenten wie Gondel, Rotor und dgl. trägt und zudem wechselnden dynamischen Belastungen durch Windkräfte und den Betrieb der Windkraftanlage ausgesetzt ist. Dies ist jedoch lediglich beispielhaft zu verstehen. Die vorliegende Erfindung ist auch für Fundamente 1 geeignet, die beispielsweise nur einer bestimmten exzentrischen Krafteinleitung ausgesetzt sind oder auch wechselnden exzentrischen Krafteinleitungen ausgesetzt sind.

Figur 2 zeigt nun eine schematische Schnittdarstellung eines Fundaments 1 mit einer ersten Weichschichteinlage 6. Wie der Figur entnehmbar, ist dabei die Weichschichteinlage 6 nicht direkt um den Mittelpunkt MP herum, sondern beabstandet von diesem angeordnet. Hierdurch bildet sich in einem mittleren, um den Mittelpunkt MP angeordneten Bereich des Fundaments 1 ein innerer lastabtragender Bereich 7 sowie ein äußerer lastabtragender Bereich 8. Das Fundament 1 ist vorliegend kreisförmig ausgeführt, sodass die erste Weichschichteinlage 6 entsprechend kreisringförmig als Weichschichtring ausgebildet ist und sich auch ein kreisringförmiger, äußerer lastabtragender Bereich 8 ausbildet. Der innere lastabtragende Bereich 7 ist hingegen kreisförmig ausgebildet.

Wie nun der Figur 2 entnehmbar, ermöglicht es der innere lastabtragende Bereich 7, die auftretende Normalkraft N im Wesentlichen unmittelbar an oder zumindest nahe der Einleitungsstelle an der Oberseite 5 des Fundaments 1 nach unten an den Untergrund abzutragen. Zusätzliche Biegebelastungen des Fundaments 1, welche zur Rissbildung führen können, können hierdurch vermieden werden. Das aus der Momentenbelastung M resultierende Kräftepaar F_{M} kann hingegen durch den äußeren lastabtragenden Bereich 8 wie im Stand der Technik in vorteilhafter Weise nahe dem Randbereich 3 des Fundaments 1 abgetragen werden, wobei ein vorteilhafter großer Hebelarm h bzw. Abstand zwischen den beiden Kräften des Kräftepaars F_{M} vorliegt.

Da jedoch durch die Unterteilung des Fundaments 1 in einen äußeren 8 und einen inneren lastabtragenden Bereich 7 die im äußeren lastabtragenden Bereich 8 abzutragenden Kräfte F_{M} insgesamt geringer sind, kann das Fundament 1 nun wesentlich kleiner als im Stand der Technik ausgeführt werden. Beispielsweise kann ein Fundament 1 für einen Windkraftturm mit einem um ca. 20 % kleineren Radius als bei bisherigen Kreisfundamenten üblich ausgeführt werden. Hierdurch können erhebliche Ersparnisse an Beton sowie Bewehrungsmaterial erzielt werden, sodass die Fundamente 1 auch wesentlich kostengünstiger hergestellt werden können. Diese Vorteile treffen natürlich nicht nur auf das in Figur 2 dargestellte Fundament 1, sondern ebenso auf die Fundamente der anderen Ausführungsbeispiele zu.

Die wenigstens eine erste Weichschichteinlage 6 ist in einem Abstand a zu dem Randbereich 3 des Fundaments 1 angeordnet, der vorzugsweise zwischen einem Drittel und der Hälfte des Abstandes r des Mittelpunkts MP zu dem Randbereich 3 beträgt.

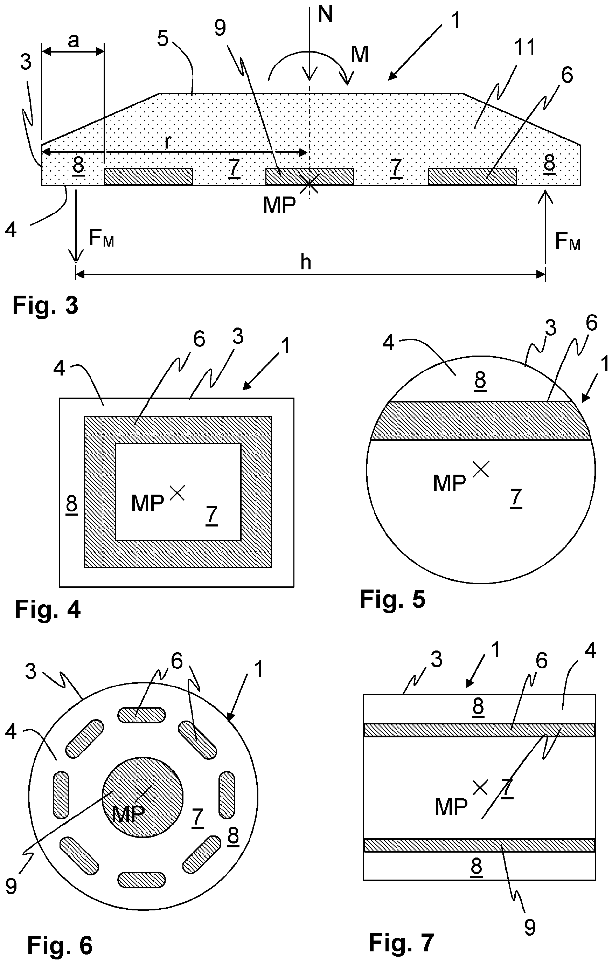

Figur 3 zeigt eine alternative Ausführung eines Fundaments, bei welchem zusätzlich zu der ersten Weichschichteinlage 6, hier ebenfalls in Form eines Weichschichtringes, eine weitere Weichschichteinlage 9 vorgesehen ist. Vorliegend ist die weitere Weichschichteinlage 9 als ein den Mittelpunkt umgebender Weichschichtkern ausgeführt. Der innere lastabtragende Bereich 7 ist hierdurch kreisringförmig um den Weichschichtkern herum ausgebildet. Der äußere lastabtragende Bereich 8 ist ebenso wie zuvor beschrieben kreisringförmig ausgebildet. Dadurch, dass sich der innere lastabtragende Bereich 7 näher an dem Mittelpunkt MP befindet als der äußere lastabtragende Bereich 8, können auch mit dieser Ausführung die Vorteile einer geringeren Belastung des Fundaments und der Vermeidung einer Rissbildung erzielt werden. Handelt es sich bei dem Bauteil 2 um einen Windkraftturm, so kann der innere lastabtragende Bereich 7 im Wesentlichen direkt unterhalb der Turmwandung platziert werden, wodurch eine besonders günstige Lastabtragung in den Untergrund erzielt werden kann.

Abweichend von der gezeigten Darstellung wäre es dabei natürlich auch denkbar, die weitere Weichschichteinlage 9 nicht als Weichschichtkern, sondern ebenfalls ringförmig um den Mittelpunkt MP herum auszubilden. Es werden in diesem Falle zwei innere lastabtragende Bereiche 7 und ein äußerer lastabtragender Bereich 8 ausgebildet, womit ebenfalls die beschriebenen Vorteile erzielt werden können.

Auch wenn in den Figuren 2 und 3 jeweils ein im Wesentlichen kreisförmiges Fundament 1 beschrieben wurde, können die genannten Vorteile natürlich auch mit Fundamenten 1 anderer Formen wie rechteckigen oder polygonalen oder sonstigen Formen erzielt werden.

Figur 4 zeigt beispielsweise eine Untersicht eines Fundaments 1 mit einer rechteckigen Grundform. Ein solches Fundament 1 könnte beispielsweise für einen Mast wie einen Strom- oder Telekommunikationsmast eingesetzt werden. Die wenigstens eine erste Weichschichteinlage 6 ist in diesem Fall rechteckringförmig ausgebildet. Natürlich wäre auch hier die Anordnung einer weiteren Weichschichteinlage 9 (s. Fig. 3) analog zu der in Figur 3 möglich. Die weitere Weichschichteinlage 9 wäre in diesem Fall entweder ebenfalls rechteckringförmig oder aber, sofern die weitere Weichschichteinlage 9 als Weichschichtkern ausgebildet ist, rechteckig um den Mittelpunkt herum ausgebildet.

Unabhängig von der Grundform des Fundaments 1 ist es jedoch keineswegs erforderlich, die wenigstens eine erste Weichschichteinlage 6 und oder die wenigstens eine weitere Weichschichteinlage 9 ringförmig auszuführen. Vielmehr sind verschiedenste Formen und Anordnungen von Weichschichteinlagen 6, 9 in Abhängigkeit von den auftretenden Belastungen möglich.

Figur 5 zeigt beispielsweise eine Untersicht auf ein kreisförmiges Fundament 1, bei welchem eine erste Weichschichteinlage 6 in Form eines Streifens angeordnet ist. Das Fundament 1 wird hierdurch wiederum in einen inneren lastabtragenden Bereich 7, welcher näher an dem Mittelpunkt MP angeordnet ist, und einen äußeren lastabtragenden Bereich 8, welcher weiter entfernt von dem Mittelpunkt MP angeordnet ist, unterteilt. Eine solche Ausführung wäre beispielsweise für ein ausschließlich einseitig exzentrisch belastetes Bauteil 2 geeignet. Dieselben Vorteile könnten natürlich auch bei einem rechteckigen Fundament 1 in analoger Weise erzielt werden.

Figur 6 zeigt eine weitere Ausführung eines Fundaments mit mehreren ersten Weichschichteinlagen 6 und vorliegend einer weiteren Weichschichteinlage 9. Die mehreren ersten Weichschichteinlagen 6 sind derart zueinander sowie beabstandet von dem Mittelpunkt MP angeordnet, dass sie, ähnlich wie in Figur 2 und 3 beschrieben, in ihrer Gesamtheit ebenfalls einen Weichschichtring bilden. Natürlich wäre es auch bei einer derartigen Ausführung denkbar, auf eine weitere Weichschichteinlage 9 zu verzichten. Weiterhin ist es natürlich nicht erforderlich, dass die mehreren ersten Weichschichteinlagen 6 ringförmig angeordnet werden. Mit dieser Figur soll lediglich demonstriert werden, dass auch mehrere erste Weichschichteinlagen 6 derart angeordnet werden können, dass wiederum wenigstens ein innerer lastabtragender Bereich 7 und ein äußerer lastabtragender Bereich 8 entsteht.

Figur 7 zeigt eine Untersicht eines weiteren Fundaments 1, bei welchem eine erste Weichschichteinlage 6 und eine weitere Weichschichteinlage 9 angeordnet sind. Die Weichschichteinlagen 6, 9 unterteilen das Fundament 1 vorliegend in einen inneren lastabtragenden Bereich 7 und zwei äußere lastabtragende Bereiche 8. Eine solche Ausführung wäre beispielsweise dann vorteilhaft, wenn auf das Bauteil 2 (hier nicht dargestellt) exzentrische Lasten aus zwei einander entgegengesetzten Richtungen wechselnd einwirken. Dabei ist es natürlich nicht unbedingt erforderlich, dass die beiden Weichschichteinlage in 6, 9 denselben Abstand zum Mittelpunkt MP aufweisen.

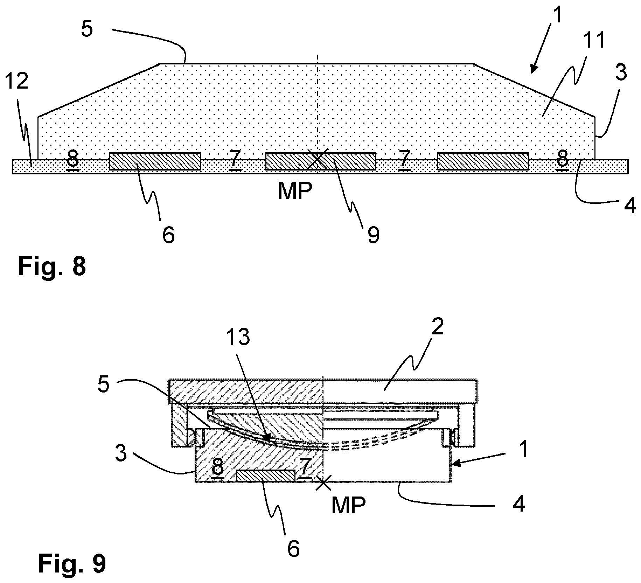

Figur 8 zeigt weiterhin noch eine schematische Schnittdarstellung eines Fundaments 1 mit einer ersten 6 und einer weiteren Weichschichteinlage 9 und einer Sauberkeitsschicht 12. Vorliegend sind die Weichschichteinlagen 6, 9 teilweise innerhalb der Sauberkeitsschicht 12 und somit auch nur teilweise innerhalb der Fundamentplatte 11 angeordnet. Vorteilhaft bei einer derartigen Anordnung ist es, dass die schützende Betonschicht um die Bewehrung des Fundamentkörpers nicht geschwächt wird. Außerdem kann der Einbau der Weichschichteinlage unabhängig vom Fundamentbau erfolgen. Falls die Weichschichteinlage im Fundament angeordnet ist, kann wiederum die Sauberkeitsschicht mit höheren Lasten beaufschlagt werden. Auch hier ist natürlich die Ausführung des Fundaments 1 sowie die Anordnung einer ersten 6 und gegebenenfalls auch einer weiteren Weichschichteinlage 9 lediglich beispielhaft zu verstehen. Sowohl die Form und Größe des Fundaments 1 als auch die Form, Art und Anzahl der Weichschichteinlagen 6, 9 spielen für die Anordnung der Weichschichteinlage(n) 6, 9 in, oberhalb oder unterhalb der Sauberkeitsschicht 12 keine Rolle.

Figur 9 zeigt schließlich noch eine schematische Halbschnittdarstellung eines Fundaments 1 mit einer ersten Weichschichteinlage 6 für ein Kalottenlager 13. Das Bauteil 2 wird in diesem Falle durch eine Auflagerplatte des Kalottenlagers 13 gebildet, während das Fundament 1 das Unterteil des Kalottenlagers 13 ausbildet. Bei derartigen Kalottenlagern 13 werden über die Auflagerplatte hohe exzentrische Kräfte in das Unterteil des Kalottenlagers 13 bzw. hier das Fundament 1 eingeleitet. Durch die wenigstens eine erste Weichschichteinlage 6, welche beabstandet von dem Mittelpunkt MP angeordnet ist, können wie bereits zu Figur 1 beschrieben, die Normalkräfte N (hier nicht dargestellt) weitgehend über den inneren lastabtragenden Bereich 7 und die exzentrisch eingeleiteten Kräfte (nicht dargestellt) über den äußeren lastabtragende Bereich 8 in den Untergrund abgetragen werden.

### Bezugszeichenliste

- 1: Fundament
- 2: Bauteil
- 3: Randbereich
- 4: Unterseite
- 5: Oberseite
- 6: erste Weichschichteinlage
- 7: innerer lastabtragender Bereich
- 8: äußerer lastabtragender Bereich
- 9: weitere Weichschichteinlage
- 11: Fundamentplatte
- 12: Sauberkeitsschicht
- 13: Kalottenlager
- MP: Mittelpunkt
- N: Normalkraft
- M: Momentenbelastung
- F_{M}: Kräftepaar
- h: Hebelarm
- a: Abstand der Weichschichteinlage 6 zu dem Randbereich 3
- r: Abstand des Mittelpunkts MP zu dem Randbereich 3

## Patentansprüche

1. Flachgegründetes Fundament (1) für ein Bauteil (2), insbesondere für ein auskragendes Bauwerk, insbesondere für einen Windkraftturm, mit einer Fundamentplatte (11) mit einer Unterseite (4), einer Oberseite (5) sowie einem Mittelpunkt (MP), wobei das Fundament (1) an oder unter der Unterseite (4) der Fundamentplatte (11) wenigstens eine erste, nicht lastabtragende Weichschichteinlage (6) aufweist, **dadurch gekennzeichnet, dass** die wenigstens eine erste Weichschichteinlage (6) beabstandet von dem Mittelpunkt (MP) angeordnet ist und das Fundament (1) in wenigstens einen inneren lastabtragenden Bereich (7), welcher näher an dem Mittelpunkt gelegen ist, und wenigstens einen äußeren lastabtragenden Bereich (8), der weiter vom Mittelpunkt entfernt gelegen ist, unterteilt.

2. Fundament (1) nach dem vorhergehenden Anspruch, **dadurch gekennzeichnet, dass** die wenigstens eine erste Weichschichteinlage (6) ringförmig, insbesondere kreisringförmig oder rechteckringförmig, um den Mittelpunkt (MP) angeordnet ist.

3. Fundament (1) nach einem der vorhergehenden Ansprüche, **dadurch gekennzeichnet, dass** das Fundament (1) an oder unter der Unterseite (4) der Fundamentplatte (11) wenigstens eine weitere, nicht lastabtragende Weichschichteinlage (9) aufweist, welche radial beabstandet zu der wenigstens einen ersten Weichschichteinlage (6) angeordnet ist.

4. Fundament (1) nach einem der vorhergehenden Ansprüche, **dadurch gekennzeichnet, dass** die wenigstens eine weitere Weichschichteinlage (9) konzentrisch innerhalb der wenigstens einen ersten Weichschichteinlage (6) angeordnet ist.

5. Fundament (1) nach einem der vorhergehenden Ansprüche, **dadurch gekennzeichnet, dass** die wenigstens eine weitere Weichschichteinlage (9) ringförmig, insbesondere kreisringförmig oder rechteckringförmig, um den Mittelpunkt (MP) angeordnet ist.

6. Fundament (1) nach einem der vorhergehenden Ansprüche, **dadurch gekennzeichnet, dass** die wenigstens eine weitere Weichschichteinlage (9) als ein um den Mittelpunkt (MP) angeordneter Weichschichtkern ausgebildet ist.

7. Fundament (1) nach einem der vorhergehenden Ansprüche, **dadurch gekennzeichnet, dass** der Weichschichtkern kreisförmig oder rechteckförmig um den Mittelpunkt (MP) ausgebildet ist.

8. Fundament (1) nach einem der vorhergehenden Ansprüche, **dadurch gekennzeichnet, dass** das Fundament (1) eine unter der Fundamentplatte (11) angeordnete Sauberkeitsschicht (12) aufweist.

9. Fundament (1) nach einem der vorhergehenden Ansprüche, **dadurch gekennzeichnet, dass** die wenigstens eine erste und/oder die wenigstens eine weitere Weichschichteinlage (6, 9) zumindest teilweise innerhalb der Sauberkeitsschicht (12) angeordnet ist.

10. Fundament (1) nach einem der vorhergehenden Ansprüche, **dadurch gekennzeichnet, dass** die wenigstens eine erste und/oder die wenigstens eine weitere Weichschichteinlage (6, 9) unterhalb der Sauberkeitsschicht (12) angeordnet ist.

11. Fundament (1) nach einem der vorhergehenden Ansprüche, **dadurch gekennzeichnet, dass** die wenigstens eine erste und/oder die wenigstens eine weitere Weichschichteinlage (6, 9) zumindest teilweise innerhalb der Fundamentplatte (11) angeordnet ist.

12. Fundament (1) nach einem der vorhergehenden Ansprüche, **dadurch gekennzeichnet, dass** die wenigstens eine erste und/oder die wenigstens eine weitere Weichschichteinlage (6, 9) aus einem Schaumstoff, insbesondere einem expandierten Polystyrol, besteht.

13. Fundament (1) nach einem der vorhergehenden Ansprüche, **dadurch gekennzeichnet, dass** ein Abstand (a) der wenigstens einen ersten Weichschichteinlage (6) zu einem Randbereich (3) des Fundaments (1) zwischen 1/3 und 1/2 eines Abstandes (r) des Mittelpunkts (MP) zu dem Randbereich (3) beträgt.

## Claims

1. A flat-based foundation (1) for a structural component (2), especially for a projecting structure, particularly for a wind turbine tower, with a foundation plate (11) having an underside (4), an upperside (5) and a center (MP), wherein the foundation (1) has at least one initial, not load-transferring soft layer insert (6) on or underneath the underside (4) of the foundation plate (11), **characterized in that**, the at least one initial soft layer insert (6) is arranged at a distance from the center (MP) and the foundation (1) is split into at least one inner load-transferring area (7), which is located closer to the center point and at least one outer load-transferring area (8), which is located further away from the center point.

2. The foundation (1) according to the previous claim, **characterized in that**, the at least one initial soft layer insert (6) is arranged around the center (MP) in the form of a ring, especially a circular or rectangular ring.

3. The foundation (1) according to one of the previous claims, **characterized in that**, the foundation (1) has at least a further, not load-transferring soft layer insert (9) on or underneath the underside (4) of the foundation plate (11), that is arranged at a radial distance to the at least one initial soft layer insert (6).

4. The foundation (1) according to one of the previous claims, **characterized in that**, the at least one further soft layer insert (9) is concentrically arranged inside the at least one initial soft layer insert (6).

5. The foundation (1) according to one of the previous claims, **characterized in that**, the at least one further soft layer insert (9) is arranged in the form of a ring, especially like a circular ring or rectangular ring, around the center (MP).

6. The foundation (1) according to one of the previous claims, **characterized in that**, the at least one further soft layer insert (9) is formed as a soft layer core around the center (MP).

7. The foundation (1) according to one of the previous claims, **characterized in that**, the soft layer core is developed as a circular or rectangular shape around the center (MP).

8. The foundation (1) according to one of the previous claims, **characterized in that**, the foundation (1) has a granular subbase (12) arranged under the foundation plate (11).

9. The foundation (1) according to one of the previous claims, **characterized in that**, the at least one initial and/or the at least one further soft layer insert (6, 9) is/are arranged at least partially inside the granular subbase (12).

10. The foundation (1) according to one of the previous claims, **characterized in that**, the at least one initial and/or the at least one further soft layer insert (6, 9) is/are arranged underneath the granular subbase (12).

11. The foundation (1) according to one of the previous claims, **characterized in that**, the at least one initial and/or the at least one further soft layer insert (6, 9) is/are arranged at least partially inside the foundation plate (11).

12. The foundation (1) according to one of the previous claims, **characterized in that**, the at least one initial and/or the at least one further soft layer insert (6, 9) is/are made of foam, especially of an expanded polystyrene.

13. The foundation (1) according to one of the previous claims, **characterized in that**, a distance (a) of the at least one initial soft layer insert (6) to a peripheral area (3) of the foundation (1) is between 1/3 and 1/2 of a distance (r) from the center (MP) to a peripheral area (3).

## Revendications

1. Fondation (1) à fondations superficielles pour un élément de construction (2), en particulier pour un ouvrage en porte-à-faux, en particulier pour une tour d'éolienne, comprenant une plaque de fondation (11) avec une face inférieure (4), une face supérieure (5) ainsi qu'un point central (MP), la fondation (1) présentant sur ou sous la face inférieure (4) de la plaque de fondation (11) au moins un premier insert en couche molle (6) non porteur, **caractérisée en ce que** le, au moins un, premier insert en couche molle (6) est disposé à distance du point central (MP) et divise la fondation (1) en au moins une zone porteuse intérieure (7), qui est située plus près du point central, et au moins une zone porteuse extérieure (8), qui est située plus loin du point central.

2. Fondation (1) selon la revendication précédente, **caractérisée en ce que** le, au moins un, premier insert en couche molle (6) est disposé sous forme annulaire, en particulier sous forme annulaire circulaire ou rectangulaire, autour du point central (MP).

3. Fondation (1) selon l'une quelconque des revendications précédentes, **caractérisée en ce que** la fondation (1) présente sur ou sous la face inférieure (4) de la plaque de fondation (11) au moins un autre insert en couche molle (9) non porteur, qui est disposé espacé radialement de l'au moins un premier insert en couche molle (6).

4. Fondation (1) selon l'une quelconque des revendications précédentes, **caractérisée en ce que** l'au moins un autre insert en couche molle (9) est disposé de manière concentrique à l'intérieur de l'au moins un premier insert en couche molle (6).

5. Fondation (1) selon l'une quelconque des revendications précédentes, **caractérisée en ce que** le, au moins un, autre insert en couche molle (9) est disposé sous forme annulaire, en particulier sous forme annulaire circulaire ou rectangulaire, autour du point central (MP).

6. Fondation (1) selon l'une quelconque des revendications précédentes, **caractérisée en ce que** le, au moins un, autre insert en couche molle (9) est conçu sous la forme d'un noyau en couche molle disposé autour du point central (MP).

7. Fondation (1) selon l'une quelconque des revendications précédentes, **caractérisée en ce que** le noyau en couche molle se présente sous une forme circulaire ou rectangulaire autour du point central (MP).

8. Fondation (1) selon l'une quelconque des revendications précédentes, **caractérisée en ce que** la fondation (1) présente une couche de propreté (12) disposée sous la plaque de fondation (11).

9. Fondation (1) selon l'une quelconque des revendications précédentes, **caractérisée en ce que** le, au moins un, premier insert en couche molle et/ou le, au moins un, autre insert en couche molle (6, 9) est/sont disposé(s) au moins partiellement au sein de la couche de propreté (12).

10. Fondation (1) selon l'une quelconque des revendications précédentes, **caractérisée en ce que** le, au moins un, premier insert en couche molle et/ou le, au moins un, autre insert en couche molle (6, 9) est/sont disposé(s) sous la couche de propreté (12).

11. Fondation (1) selon l'une quelconque des revendications précédentes, **caractérisée en ce que** le, au moins un, premier insert en couche molle et/ou le, au moins un, autre insert en couche molle (6, 9) est/sont disposé(s) au moins partiellement au sein de la plaque de fondation (11).

12. Fondation (1) selon l'une quelconque des revendications précédentes, **caractérisée en ce que** le, au moins un, premier insert en couche molle et/ou le, au moins un, autre insert en couche molle (6, 9) est/sont constitué(s) d'une mousse, en particulier d'un polystyrène expansé.

13. Fondation (1) selon l'une quelconque des revendications précédentes, **caractérisée en ce qu'**une distance (a) de l'au moins un premier insert en couche molle (6) à une zone de bordure (3) de la fondation (1) est comprise entre 1/3 et 1/2 d'une distance (r) du point central (MP) à la zone de bordure (3).
